(19) **Europäisches Patentamt**
**European Patent Office**
**Office européen des brevets**

(11) Publication number: **0 509 564 B1**

## (12) EUROPEAN PATENT SPECIFICATION

(45) Date of publication of patent specification: **07.09.94**   (51) Int. Cl.[5]: **C03B 37/014**

(21) Application number: **92112265.1**

(22) Date of filing: **25.09.90**

(60) Publication number of the earlier application in accordance with Art.76 EPC: **0 420 148**

(54) **Furnace for production of optical fiber preform.**

(30) Priority: **25.09.89 JP 246332/89**
**22.02.90 JP 39726/90**
**22.02.90 JP 39727/90**

(43) Date of publication of application:
**21.10.92 Bulletin 92/43**

(45) Publication of the grant of the patent:
**07.09.94 Bulletin 94/36**

(84) Designated Contracting States:
**DE FR GB IT**

(56) References cited:
**EP-A- 0 302 121**
**DE-A- 2 818 550**

**PATENT ABSTRACTS OF JAPAN vol. 11, no. 53 (C-404)(2500) 19 February 1987 & JP-A-61 215 226 (Furukawa Electric Co.Ltd.) 25 September 1986.**

(73) Proprietor: **SUMITOMO ELECTRIC INDUS-TRIES, LTD**
**5-33, Kitahama 4-chome,**
**Chuo-ku**
**Osaka-shi, Osaka-fu 541 (JP)**

(72) Inventor: **Tsuchiya, Ichiro, c/o Yokohama Works of Sumitomo Electric Industries, Ltd., 1, Taya-cho, Sakae-ku Yokohama-shi, Kanagawa-ken (JP)**
Inventor: **Saito, Masahide, c/o Yokohama Works of Sumitomo Electric Industries, Ltd., 1, Taya-cho, Sakae-ku Yokohama-shi, Kanagawa-ken (JP)**
Inventor: **Ishikawa, Shinji, c/o Yokohama Works of Sumitomo Electric Industries, Ltd., 1, Taya-cho, Sakae-ku Yokohama-shi, Kanagawa-ken (JP)**
Inventor: **Ohga, Yuichi, c/o Yokohama Works of Sumitomo Electric Industries, Ltd., 1, Taya-cho, Sakae-ku Yokohama-shi, Kanagawa-ken (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Inventor: **Kanamori, Hiroo, c/o Yokohama Works of Sumitomo Electric Industries, Ltd., 1, Taya-cho, Sakae-ku Yokohama-shi, Kanagawa-ken (JP)**

(74) Representative: **Brauns, Hans-Adolf, Dr. rer. nat. et al Hoffmann, Eitle & Partner Patentanwälte Postfach 81 04 20 D-81904 München (DE)**

**Description**

BACKGROUND OF THE INVENTION

Field of the invention

The present invention relates to a furnace in which a porous glass preform for an optical fiber preform is thermally treated, for example, dehydrated, doped or sintered to produce a highly pure quartz glass preform for an optical fiber.

Description of the Related Art

In the production of an optical fiber preform, a porous glass preform consisting of fine quartz glass particles produced by the Vapor Phase Axial Deposition or the Outside Chemical Vapor Deposition is dehydrated, densified and vitrified. During the dehydration, the densification and/or the vitrification, fluorine is added to the glass to control a refractive index profile of the preform. A heating furnace comprising a muffle tube is used for the dehydration, the densification or the vitrification.

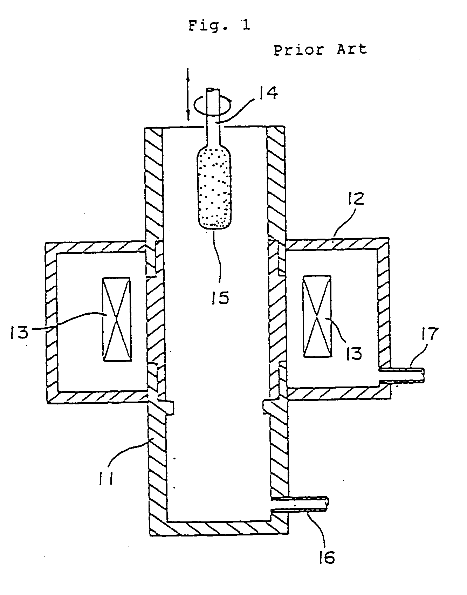

One example of such a heating furnace comprising a muffle tube is shown in Fig. 1. The conventional heating furnace comprises a hollow furnace body 12 and a muffle tube 11 which passes through the furnace body 12. A heating member 13 is placed in the furnace body 12 which has an inlet 17 for introducing an inert gas into the furnace body in order to prevent deterioration of the muffle tube, and the muffle tube 11 has an inlet 16 for introducing an atmosphere gas such as $Cl_2$, $SiF_4$ or He into the muffle tube. In the use of this heating furnace, a porous preform 15 is thermally treated by means of the heater 13 while it is suspended from a supporting rod 14.

It is known that the muffle tube is made of highly pure carbon coated with silicon carbide (hereinafter referred to as SiC).

For example, in Japanese Patent Kokai Publication No. 201634/1986, a carbon made muffle tube coated with SiC is used, and a surface of the SiC coating is further oxidized.

Since such a muffle tube comprises carbon as a substrate, it can be kept at a high temperature without deterioration, whereby it can be heated and cooled many times with careful temperature change. In addition, the carbon substrate is hardly oxidized since it is coated with SiC so that impurities contained in the carbon substrate do not penetrate the glass preform. Because the surface of the SiC coating has been oxidized, the muffle tube does not deteriorate with $Cl_2$ or $SiF_4$.

As described above, the conventional muffle tube comprises the carbon made substrate, a surface of which is coated with SiC and the surface of the SiC coating is oxidized.

However, it is known that there arise various difficulties during the fabrication of such a muffle tube. Firstly, conditions of the SiC coating oxidation are so sensitive that it is difficult to uniformly oxidize the SiC coating. As a result, some portions are not oxidized and/or the coating peels off due to internal stress within the oxidized SiC coating.

The oxidation of the SiC coating is carried out in an atmosphere comprising oxygen during the dehydration or the fluorine addition of the glass preform. Alternatively, the muffle tube is baked in an oxygen atmosphere. If the SiC coating partially peels off, the carbon made substrate of the muffle tube is severely oxidized during the oxidation step of the SiC coating, whereby the life of the muffle tube is extremely reduced.

As described above, there are severe problems during the oxidation of the SiC coating. The SiC coating is rapidly deteriorated by the fluorine-containing gas when the oxidation of the SiC coating is omitted. Such deterioration begins at a temperature of 1200 °C with $SiF_4$ gas, and rapidly proceeds at a temperature above 1400 °C. As a result, the carbon made substrate under the SiC coating is oxidized by a small amount of oxygen, whereby the life of the muffle tube is extremely shortened.

The glass preform may be densified/vitrified in an atmosphere consisting of an inert gas, depending on the kind of optical fiber which is drawn from the preform. In such a case, the surface of the SiC coating is not required to be oxidized for the protection from $Cl_2$ or $SiF_4$, and then it is more preferable to omit the oxidation step since sensitive conditions are required. However, even in such a case, the SiC coating may be oxidized with a small amount of oxygen in the muffle tube.

EP-A-0 302 121 discloses a heating furnace for heating a porous preform made of fine particles of quartz base glass for an optical fiber in an atmosphere comprising a fluorine-containing atmosphere to add fluorine to the preform and to vitrify the preform to produce a glass preform for an optical fiber, which comprises a heater and muffle tube positioned inside the heater to separate a heating atmosphere from the heater, wherein at least the inner layer of the muffle tube consists of highly pure carbon. According to a preferred embodiment, the muffle tube comprises an inner layer made of highly pure carbon and an outer layer made of silicon carbide. According to a further preferred embodiment, the muffle tube comprises a tube body made of silicon carbide and a layer of highly pure carbon coated on an inner wall of the tube body.

## SUMMARY OF THE INVENTION

It is an object of the present invention to provide a furnace in which porous glass preforms are thermally treated for a long period of time to produce highly pure quartz glass preforms for an optical fiber without decrease of strength of the optical fiber.

In the present invention, there is provided a furnace comprising a muffle tube made of a gas impermeable and heat resistant material, a heater in a furnace body which surrounds the muffle tube and an inner cylinder made of a heat resistant material which is detachably fitted inside the muffle tube near the heater for a thermal treatment of a quartz glass preform by inserting the preform in the muffle tube, wherein said muffle tube comprises a material selected from a group consisting of highly pure carbon coated with gas impermeable silicon carbide, sintered silicon carbide coated with gas impermeable silicon carbide, gas impermeable silicon carbide and highly pure carbon coated with gas impermeable carbon, and said inner cylinder comprises a material selected from a group consisting of highly pure carbon, highly pure carbon coated with gas impermeable silicon carbide and highly pure carbon coated with gas impermeable carbon.

## BRIEF DESCRIPTION OF THE DRAWINGS

Fig. 1 schematically shows a cross-sectional configuration of a conventional heating furnace, and
Fig. 2 schematically shows a cross-sectional configuration of one embodiment of the present furnace.

## DETAILED DESCRIPTION OF THE INVENTION

The porous glass preform made of quartz is thermally treated with the heater in the muffle tube in the furnace body. During such treatment, a small amount of oxygen and/or water in the muffle tube firstly reacts with a material of the inner cylinder which is fitted inside the muffle tube and near the heater. Therefore, the water and the oxygen do not directly react with the muffle tube to deteriorate it.

The present invention will be, hereinafter, explained in detail with reference to the accompany drawings. Members which are substantially the same as those of the conventional furnace are given the same numerical numbers as in the conventional furnace, and detailed explanations which are the same as those on the conventional furnace are neglected.

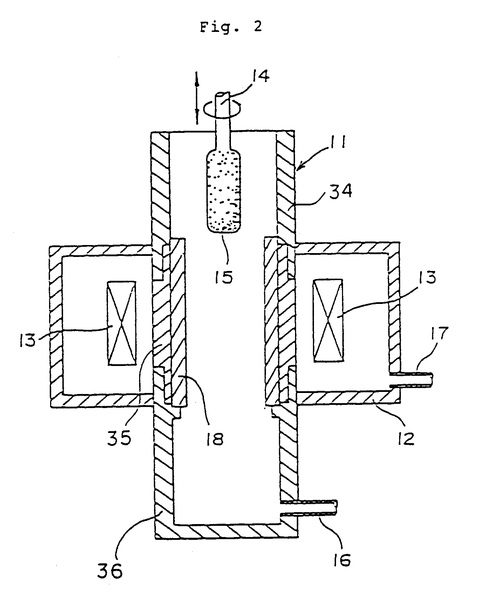

In the embodiment shown in Fig. 2, an inner cylinder 18 is detachably fitted inside a muffle tube 11 near a heater 13. In this embodiment, the muffle tube 11 is made of highly pure carbon coated with gas impermeable SiC. The muffle tube may be made of sintered silicon carbide coated with gas impermeable SiC, gas impermeable SiC or highly pure carbon coated with gas impermeable carbon such as pyrolitic carbon or vitreous carbon. In the case where the SiC or the carbon coating is applied, at least an inner surface of the muffle tube is coated with SiC or carbon. Both surfaces, of course, may be coated with SiC or carbon.

Although the inner cylinder 18 is made of highly pure carbon in this embodiment, at least an inner surface of the inner cylinder may be coated with gas impermeable carbon or SiC.

The porous glass preform 15 is thermally treated, for example, dehydrated, fluorine-added and/or sintered with the heater 13 in an atmosphere comprising a gas such as $SiCl_4$, $SiF_4$ or He supplied through an inlet 16 in the muffle tube 11. During the treatment, a trace amount of oxygen and water adsorbed in the quartz made porous glass preform 15 is liberated into the atmosphere in the muffle tube 11.

In the case where the conventional furnace without the inner cylinder 18 is used, the following reaction proceeds to deteriorate the SiC coating:

$$SiC + 3SiF_4 + 1/2O_2 \rightarrow 4SiF_3 + CO \qquad (1)$$

Even in the case where only the inert gas is used, the surface of the SiC coating is oxidized with oxygen in the muffle tube according to the following equation:

$$2SiC + 3O_2 \rightarrow 2SiO_2 + 2CO \qquad (2)$$

and the SiC coating may be destroyed in the worst case.

However, according to the present invention, the small amount of oxygen which reacts according to the above equation (1) or (2) firstly reacts with highly pure carbon of the inner cylinder according to the following equation (3) to be removed:

$$C + 1/2O_2 \rightarrow CO \qquad (3)$$

Thus, the deterioration does not reach the muffle tube and the muffle tube is protected.

In addition, in the case where the highly pure carbon made inner cylinder 18 is coated with gas impermeable carbon or SiC, the atmosphere gas cannot penetrate the inner cylinder 18 itself during the initial term of use, whereby the protection with the inner cylinder 18 for the SiC coating on the muffle tube 11 is further promoted.

Since the deterioration of the SiC coating according to the equation (1) is remarkable at a temperature above 1200 °C, the inner cylinder is installed so that it covers a portion of an inner surface of the muffle tube near the heater 13 which is heated to a temperature above 1200 °C.

The inner cylinder 18 gradually wears according to the equation (3) during each thermal treatment of the porous preform 15. With such wear, the muffle tube 11 and the SiC coating thereon is fully protected by means of the inner cylinder 18. Although the inner cylinder has to be replaced with a new one depending on the extent of wear, cost reduction over replacement of the muffle tube can be realized since the inner cylinder 18 is smaller and easily fabricated in comparison with the muffle tube 11.

Example 1

Now, experimental results will be described in below. Quartz made porous glass preforms 15 were thermally treated with using the conventional furnace as shown in Fig. 1 and the present furnace as shown in Fig. 2. Then, pure silica core single mode optical fibers were drawn from the treated preforms.

The muffle tube 11 used in each furnace was made of highly pure carbon coated with SiC, and the inner cylinder 18 was made of highly pure carbon. Temperature conditions and atmosphere gas conditions of the treatments are shown in following Table 1:

Table 1

| Treatment | Temperature | Atmosphere gas |
|---|---|---|
| Dehydration | 950-1100 °C | $SiCl_4$, He |
| F-addition | 1250-1400 °C | $SiF_4$, He |
| Sintering | 1550-1650 °C | He |

After the thermal treatments under the conditions as above using the furnace as shown in Fig. 1, the SiC coating inside the muffle tube 11 changed its color to black in a portion which was heated to a temperature above 1200 °C, and more than 70 % of the SiC coating disappeared so that the carbon-made substrate was exposed and oxidation of a portion of the exposed carbon substrate started. It was expected from these results that at most 250 quartz-made porous glass preforms could be thermally treated with a single conventional muffle tube.

On the contrary, in the case where the present furnace was used, the inner surface of the inner cylinder 18 was slightly oxidized after the thermal treatments, but the SiC coating of the muffle tube was not changed at all. The pure silica single mode optical fiber drawn from the thermally treated preform with the present furnace had a very low average transmission loss of 0.173 dB/km at a wavelength of 1.55 $\mu$m.

In the case where the glass preform was thermally treated using the present furnace comprising the inner tube made of highly pure carbon, air may enter the muffle tube when the porous glass preform 15 is inserted in the inner tube, whereby the inner tube may be deteriorated due to oxidation. In order to prevent such oxidation, the insertion of the glass preform may be performed at a temperature below 400 °C or an upper portion of the muffle tube 11 may be partitioned as a front chamber.

According to the present furnace for the production of the highly pure quartz preform by the thermal treatment, a small amount of oxygen and water contained in the glass preform firstly reacts with the inner cylinder during the thermal treatment of the preform since the inner cylinder is detachably fitted inside the muffle tube. Therefore, oxygen and water do not directly deteriorate the muffle tube, whereby the life of the muffle tube is extended and the preform is suitably thermally treated.

In the present invention, there is also provided a furnace as described above, wherein at least one highly pure carbon-made member which constitutes the muffle tube or the inner cylinder, or optional additional element in the muffle tube which is necessary for the muffle tube (for example, a part of a supporting rod) is made of a graphite material selected from the group consisting of a graphite material which is produced by self-sintering mesophase powder and a highly pure graphite material consisting of raw particles selected from the group consisting of particles having a maximum particle size of not larger than 50 $\mu$m and particles having an average particle size of not larger than 20 $\mu$m.

In the furnace of the present invention, the muffle tube may comprise a single highly pure carbon-made member or a plurality of the highly pure carbon-made members. When the muffle tube comprises the single highly pure carbon-made member, the member may be made of either of the graphite materials as described above. When the muffle tube consists of a plurality of the highly pure carbon made members, at least one member which is heated to the highest temperature (for example 1200 °C) is preferably made of either of the graphite materials as described above. All of the members may be made of such graphite materials.

Though any member may be provided with the gas impermeable coating made of, for example, SiC, pyrolitic carbon or vitreous carbon, it is preferable to provide at least the member which is heated to such highest temperature with the coating.

In the case where the quartz glass preform is thermally treated in the present furnace having the muffle tube, the inner tube and optional element (which is, hereinafter, also referred to as muffle tube assembly) at least a part of which is made of the graphite material produced by self-sintering the mesophase powder, generation of carbon powder is hardly observed when the muffle tube assembly is consumed by a trace amount of water and oxygen, whereby no bubble is generated in the quartz glass preform because of absence of carbon powder. Thus, there is no strength reduction of the optical fiber which is produced from the preform.

The term "graphite material produced by self-sintering the mesophase powder" is intended to mean a graphite material produced by self-sintering an intermediate liquid phase in which fine spherical particles having optical anisotropy are generated during an initial period of a thermal treatment of coal or heavy oil. Such particles are called mesophase fine spherical particles. The graphite material which is produced by self-sintering the mesophase powder is commercially available from Sumitomo Metal Industries, Ltd. (Osaka, Japan) and Toshiba Ceramics Co., Ltd. (Tokyo, Japan).

In the case where the quartz glass preform is thermally treated in the present furnace having the muffle tube assembly comprising (at least one member made of) the highly pure graphite material consisting of the raw particles having a maximum particle size (diameter) of not larger than 50 $\mu$m or an average particle size (diameter) of not larger than 20 $\mu$m, generation of carbon powder is hardly observed. Even when carbon powder is generated, such graphite powder is so fine that it reacts with $SiO_2$ on the preform surface to produce gases of SiO and CO, whereby no bubble is generated because of the absence of the carbon powder in the preform. Thus, there is no strength reduction of the optical fiber which is produced from the preform.

The furnace of the preferred embodiment of the second aspect of the present invention is schematically shown also in Fig. 2 as a sectional view. In this, the muffle tube 11 comprises three members, that is the upper member 34, the middle member 35 and the lower member 36, and the inner cylinder 18 which is made of the graphite material produced by self-sintering the mesophase powder. The inner cylinder may be provided with the gas impermeable coating (not shown).

The middle member 35 is preferably made of the graphite material produced by self-sintering the mesophase powder provided with the gas impermeable coating (not shown).

Under conditions such that the gas impermeable coating is not so consumed or the coating withstands deterioration for a sufficient period, the middle member 35 is not necessarily made of the graphite material produced by self-sintering the mesophase powder. Other members such as the upper member and the lower member may be optionally made of such graphite material and may be provided with the gas impermeable coating.

In the construction as shown in Fig. 2, the inner cylinder may be made of the highly pure graphite material consisting of the raw particles having a maximum particle size of not larger than 50 $\mu$m or an average particle size of not larger than 20 $\mu$m.

When a small amount of water or oxygen consumes the muffle tube material so that carbon powder is generated during the thermal treatment of the preform, the particles of the carbon powder are extremely fine.

In this case, even when the carbon powder penetrates the preform to a somewhat inner portion, it is completely gasified because of following reaction between the carbon powder and quartz:

$$SiO_2 + C \rightarrow SiO \text{ (gas)} + CO \text{ (gas)}$$

Thus, no bubble is generated in the preform and strength reduction of the optical fiber drawn from the preform is prevented.

In this embodiment, the middle member 35 is also preferably made of the highly pure graphite material coated with the gas impermeable layer as described above.

Under conditions such that the gas impermeable coating is not so consumed or the coating withstands deterioration for a sufficient period, the middle member 35 is not necessarily made of such highly pure graphite material. Other members such as the upper member and the lower member may be optionally made of such graphite material and provided with the gas impermeable coating.

Example 2

The furnace as shown in Fig. 2 was used. The inner cylinder 18 was made of the graphite material produced by self-sintering the mesophase powder. A bulk specific gravity of the graphite material was 1.95 and a maximum size of the raw particles for the graphite material was 5 $\mu$m. The middle member 35 of the muffle tube 3 was made of a usual isotropical graphite and was coated with the gas impermeable pyrolysis carbon. The upper and lower members 34 and 36 were made of usual isotropical graphite and were coated with the gas impermeable SiC.

Eighty preforms produced by the VAD method were sintered in the furnace under conditions shown in following Table 2:

Table 2

| Treatment | Temperature | Atmosphere gas |
|-----------|-------------|----------------|
| Dehydration | 950-1100 $^\circ$C | He, $SiCl_4$ or $Cl_2$ |
| Sintering | 1550-1650 $^\circ$C | He |

During the sintering treatment, no generation of carbon powder was observed in the muffle tube and no bubble was observed in the surface layer portion of the sintered preform.

An optical fiber was drawn from each of the tenth and the eightieth preforms. Twenty sample fibers each having a length of 20 m were cut from each optical fiber and they were tested for longitudinal tensile strength. There was no sample fiber which had low strength, that is, a tensile strength of less than 44 N (4.5 kg-f).

Comparative Example 1

For comparison with the above example, Example 1 was repeated except that a furnace which comprised an inner cylinder made of a usual isotropical carbon material was used. The carbon material had a bulk specific gravity of 1.77 and a maximum raw particle size of 60 $\mu$m. Sixty preforms were sintered under the same conditions as in Example 1.

An optical fiber was drawn from each of the tenth and the sixtieth preforms and similarly the longitudinal tensile test was performed.

There is no sample fiber drawn from the tenth preform which had low strength. However, 30 % of the sample fibers drawn from the sixtieth preform had low strength (as defined above). When the sixtieth preform was treated, carbon powder was generated in the muffle tube and bubbles were observed in the preform surface portion.

As described above, the furnace of the present invention having the muffle tube assembly at least a part of which is made of the graphite material produced by self-sintering the mesophase powder can be used to thermally treat the preform for a long period without the generation of carbon powder in the muffle tube and without strength reduction of the optical fiber drawn from the preform.

7

Example 3 and Comparative Example 2

The furnace as shown in Fig. 2 was used. The inner cylinder 8 was made of the graphite material as shown in Table 3. In Table 3, Samples A and B are for Example 3 and Samples C and D are for Comparative Example 2. Eighty preforms produced by the VAD method were thermally treated under the same conditions as in Example 2.

Table 3

| Sample | Material | Shaping method | Bulk specific gravity | Maximum particle size | Average particle size |
|---|---|---|---|---|---|
| A | Isotropical graphite | Rubber pressing | 1.84 | 20 μm | - |
| B | Isotropical graphite | Rubber pressing | 1.85 | - | 10 μm |
| C | Isotropical graphite | Rubber pressing | 1.77 | 60 μm | - |
| D | Anisotropical graphite | Extrusion | 1.64 | 250 μm | - |

An optical fiber was drawn from each of the tenth and the eightieth preforms. Twenty sample fibers each having a length of 20 m were cut from each fiber and tested for longitudinal tensile strength. From the test data, a ratio of the optical fiber having low strength, that is, the tensile strength of less than 44 N (4.5 kg-f) was calculated.

The results are shown as follows:

8

Sample A

Between the fiftieth and the sixtieth preforms, extremely fine carbon powder was generated in the muffle tube. No bubble was observed in the surface layer even in the eightieth sintered preform.

The results of the longitudinal tensile test were such that 5 % of the sample fibers drawn from the tenth preform had low strength, and no sample fiber drawn from the eightieth preform had low strength.

Sample B

Between the fiftieth and the sixtieth preforms, extremely fine carbon powder was generated in the muffle tube. No bubble was observed in the surface layer even in the eightieth sintered preform.

The results of the longitudinal tensile test were such that no sample fiber drawn from the tenth preform had low strength, and 5 % of the sample fibers drawn from the eightieth preform had low strength.

Sample C

Between the fiftieth and the sixtieth preforms, slightly coarse carbon powder was generated in the muffle tube.

Because of the generation of the bubbles in the surface layer, the thermal treatment was stopped at the sixtieth preform. Optical fibers were drawn from the sixtieth preform and the longitudinal tensile test was performed. The ratio of the sample fibers having low strength was 30 %.

No sample fiber drawn from the tenth preform had low strength.

Sample D

Between the fortieth and the fiftieth preforms, slightly coarse carbon powder was generated in the muffle tube. Since bubbles were generated in the surface layer of the preform, the thermal treatment was stopped at the fiftieth preform. Optical fibers were drawn from the fiftieth preform and the longitudinal tensile test was performed. The ratio of the sample fibers having low strength was 35 %.

Five percent of the sample fibers drawn from the tenth preform had low strength.

As described above, the furnace of the present invention having the muffle tube assembly, at least one member of which is made of the highly pure graphite consisting of the raw particles having a maximum size of not larger than 50 $\mu$m or an average size of not larger than 20 $\mu$m, can be used to thermally treat preforms for a long period without the generation of carbon powder in the preform and without strength reduction of the optical fiber drawn from the preform.

**Claims**

1. A furnace comprising a muffle tube (11) made of highly pure carbon with a gas impermeable coating, a heater (13) in a furnace body (12) which surrounds the muffle tube (11) and an inner cylinder (18) made of highly pure carbon with or without gas impermeable coating which is detachably fitted inside the muffle tube near the heater for a thermal treatment of a quartz glass preform (15) by inserting the preform in the muffle tube,
   **characterized in that** at least one of the highly pure carbon made members (34, 35, 36) which constitute the muffle tube (11), or the inner cylinder (18) or an additional element necessary for the muffle tube is made of a graphite material which is produced by self-sintering mesophase powder or consisting of a highly pure graphite material of raw particles selected from a group consisting of particles having a maximum particle size of not larger than 50 $\mu$m and particles having an average particle size of not larger than 20 $\mu$m.

**Patentansprüche**

1. Ofen, umfassend ein Muffelrohr (11) aus hochreinem Kohlenstoff mit einem gasundurchlässigem Überzug, eine Heizvorrichtung (13) in einem Ofenkörper (12), der das Muffelrohr (11) umgibt, und einen inneren Zylinder (18), der aus hochreinem Kohlenstoff mit oder ohne gasundurchlässigem Überzug hergestellt ist und abnehmbar im Inneren des Muffelrohrs in der Nähe der Heizvorrichtung eingepaßt ist, zur thermischen Behandlung einer Quarzglas-Vorform (15) unter Einsetzen der Vorform in das Muffelrohr, dadurch gekennzeichnet, daß mindestens eines der aus hochreinem Kohlenstoff hergestellten Elemente (34, 35, 36), die das Muffelrohr (11) bilden,oder der innere Zylinder (18) oder ein für das Muffelrohr erforderliches zusätzliches Element aus einem Graphitmaterial hergestellt ist, das durch Selbstsinterung von Mesophasenpulver gebildet ist, das aus hochreinem Graphitmaterial in Form von Rohteilchen, die aus der Gruppe Teilchen mit einer maximalen Teilchengröße von nicht mehr als 50 μm und Teilchen mit einer durchschnittlichen Teilchengröße von nicht mehr als 20 μm ausgewählt sind, besteht.

**Revendications**

1.  Four comprenant un tube moufle (11) réalisé en carbone de haute pureté avec un revêtement imperméable aux gaz, un organe de chauffage (13) dans un corps (12) de four qui entoure le tube moufle (11), et un cylindre intérieur (18), réalisé en carbone de haute pureté avec ou sans revêtement imperméable aux gaz, qui est monté de façon détachable à l'intérieur du tube moufle au voisinage de l'organe de chauffage, destiné au traitement thermique d'une préforme de verte de quartz (15), en introduisant la préforme dans le tube moufle,
    caractérisé en ce que l'un au moins des éléments (34, 35, 36) réalisés en carbone de haute pureté, qui constituent le tube moufle (11), ou le cylindre intérieur (18) ou un élément additionnel nécessaire pour le tube moufle, est réalisé en matériau en graphite qui est produit par auto-frittage d'une poudre mésophase constituée d'un matériau en graphite de haute pureté en particules brutes choisies parmi un groupe comprenant les particules ayant une taille de particules maximum qui n'est pas supérieure à 50μm et les particules ayant une taille de particules moyenne qui n'est pas supérieure à 20μm.

Fig. 1

Prior Art

EP 0 509 564 B1

Fig. 2